# EUROPÄISCHE PATENTSCHRIFT

(11) **EP 0 863 494 B1**
(45) Veröffentlichungstag und Bekanntmachung des Hinweises auf die Patenterteilung: **07.05.2003**
(21) Anmeldenummer: 97119316.4
(22) Anmeldetag: 05.11.1997
(51) Int. Cl.: G09F 7/08, G09F 7/18

(54) **Kennzeichnungs-Aufnahmeeinrichtung**
Holding frame for marking elements
Dispositif de retenue pour éléments de repérage

(30) Priorität: 28.02.1997 DE 29703594 U
(43) Veröffentlichungstag der Anmeldung: 09.09.1998
(73) Patentinhaber: Schuld, Herbert, 65396 Walluf (DE)
(72) Erfinder: Schuld, Herbert, 65396 Walluf (DE)
(74) Vertreter: Blumbach, Kramer & Partner GbR

(56) Entgegenhaltungen:
- DE-U- 29 517 552
- FR-A- 2 642 208
- GB-A- 2 065 951

## Beschreibung

Die Erfindung betrifft eine Kennzeichnungs-Aufnahmeeinrichung zur Aufnahme von wenigstens zwei ebenen Kennzeichnungsträgern, nach dem Oberbegriff des Anspruchs 1.

Nach geltenden Vorschriften müssen Behälter, Container, Kesselwagen und dgl., in denen Gefahrgut gelagert oder transportiert wird, mit entsprechenden Warntafeln gekennzeichnet werden. Bekannt, insbesondere aus den Schutzschriften DE-U 93 09 672.0, DE-U 94 06 157.2 und **DE-U 94 15 445.7**, sind Schilder- oder Kennzeichnungshalter zum Einschieben der jeweiligen Kennzeichnungsträgern bzw. Warntafeln. Diese müssen hierzu jedoch als Einstofftafeln ausgebildet sein, so daß sich deren Einsatz oftmals auf nur eine bestimmte Art von Gefahrgut beschränkt. Folglich werden bei der Lagerung oder dem Transport unterschiedlicher Gefahrgüter infolge der mit dem benötigten breiten Sortiment an solchen Einstofftafeln verbundenen Mehrausgaben steigende Kosten verursacht. Ferner muß bei häufig wechselnder Gefahrgutfracht eine Vielzahl von Einstofftafeln ständig vor Ort verfügbar sein.

Ein derzeitige Warntafel, die aus einzelnen Kennzeichnungsträgern zusammengestellt wird, umfaßt einen Halter mit Führungsschienen oder -schlitzen. Die einzelnen Kennzeichnungsträger müssen hierbei von einer Seite nacheinander in den Halter eingeschoben werden, so daß beim Austauschen der "hinteren" Kennzeichnungsträger zuerst die "vorderen" entfernt werden müssen. Ferner ist von Nachteil, daß für einen Halter nur bestimmte Kennzeichnungsträger verwendet werden können, die sich zudem beim Einschieben leicht verkannten oder verklemmen können.

Die Aufgabe der Erfindung besteht darin, eine Kennzeichnungs-Aufnahmeeinrichung bereitzustellen, mit welcher sich im wesentlichen für jedes zu kennzeichnende Gefahrgut durch einfaches individuelles Austauschen einzelner Kennzeichnungsträger problemlos und schnell eine vorschriftsmäßige Warntafel zusammenzustellen läßt.

Die erfindungsgemäße Aufgabe wird auf höchst überraschende Weise bereits durch eine Kennzeichnungs-Aufnahmeeinrichung mit den Merkmalen des Anspruchs 1 gelöst, und vorteilhafte und bevorzugte Ausgestaltungen sind in den Unteransprüchen aufgeführt.

Durch Bereitstellen einer Kennzeichnungs-Aufnahmeeinrichung zur Aufnahme von wenigstens zwei ebenen Kennzeichnungsträgern, umfassend eine Grundplatte mit einer Halterungseinrichtung, wobei in der Halterungseinrichtung für jeden Kennzeichnungsträger jeweils ein Fenster ausgebildet ist und sich jeweils zumindest ein Abschnitt der das Fenster umgebenden Umrandungen der Halterungseinrichtung partiell derart in das Fenster erstreckt, daß in Verbindung mit der Grundplatte eine Tasche definiert ist, in welcher ein von einer offenen Seite der Tasche in diese einschiebbarer Kennzeichnungsträger in einer vorbestimmten Anordnung haltbar ist, wird die Möglichkeit geschaffen, anwenderspezifisch individuell ausgebildete Taschen zur Aufnahme einzelner, auch unterschiedlicher Kennzeichnungsträger in einer einzigen Einheit bereitzustellen, um im wesentlichen für jedes zu kennzeichnende Medium problemlos und preiswert durch einfaches individuelles Austauschen einzelner Träger eine vorschriftsmäßige Warntafel zusammenzustellen. Parallel dazu wird durch die von einander getrennte Anordnung der Taschen ein gegenseitiges Behindern beim Einschieben oder Herausziehen der Kennzeichnungsträger ausgeschlossen.

Um zu gewährleisten, daß Kennzeichnungsträger größerer Plattenstärke von den Taschen aufgenommen werden können, ohne dabei ein Verklemmen der Kennzeichnungsträger zu bewirken, ist zur verbesserten Ausbildung der Tasche eine Vertiefung in der Grundplatte vorgesehen.

Vorteilhafterweise ist an der offenen Seite der Tasche eine Einschiebe-Ausnehmung in der Grundplatte ausgebildet, welche ein Einführen des Kennzeichnungsträgers in die Tasche bzw. dessen Herausziehen aus der Tasche wesentlich erleichtert.

Um den jeweiligen Anforderungen und Vorschriften einzelner Anwendungsbereiche zu genügen, kann die erfindungsgemäße Kennzeichnungs-Aufnahmeeinrichung Kunststoff oder metallisches Material enthalten und je nach Wunsch mit einer im wesentlichen quadratischen oder rechteckigen Grundplatte bereitgestellt werden. Ferner kann die Halterungseinrichtung mit Hilfe von speziellen Klebern auf der Grundplatte befestigt, oder auf der Grundplatte angelötet, angeschweißt oder angenietet sein.

In weiterer Ausgestaltung ist die Ausbildung von Sicken mit Bohrlöchern in der Grundplatte zur Aufnahme von Schraubköpfen vorgesehen, um die Kennzeichnungs-Aufnahmeeinrichung direkt an einem Fahrzeug oder Container zu befestigen.

Ein weiterer Vorteil der erfindungsgemäßen Kennzeichnungs-Aufnahmeeinrichung besteht darin, diese als Einsatz für einen Kennzeichnungshalter, insbesondere für einen Kennzeichnungshalter nach dem Gebrauchsmuster **DE-U 94 15 445.7**, verwenden zu können, so daß ein solcher Kennzeichnungshalter wesentlich flexibler und vielseitiger einsetzbar ist.

Zum sicheren Halten einer als Einsatz verwendeten Kennzeichnungs-Aufnahmeeinrichung ist es ferner ausreichend, einen Kennzeichnungshalter mit einem Halterand und/oder eine Quer- und/oder Längsstrebe anstatt mit einem Gitter zu verwenden, wodurch die Lesbarkeit der Warntafel erhöht und die Herstellungskosten aufgrund des eingesparten Materials gesenkt werden.

Die Erfindung wird nachfolgend anhand zweier bevorzugter Ausführungsformen detaillierter beschrieben.

Es zeigen:
- Fig. 1: eine schematische Vorderansicht einer ersten Ausführungsform der erfindungsgemäßen Kennzeichnungs-Aufnahmeeinrichtung,
- Fig. 2: eine schematische Seitenansicht der Kennzeichnungs-Aufnahmeeinrichtung der Fig. 1,
- Fig. 3: eine schematische Vorderansicht einer zweiten Ausführungsform.

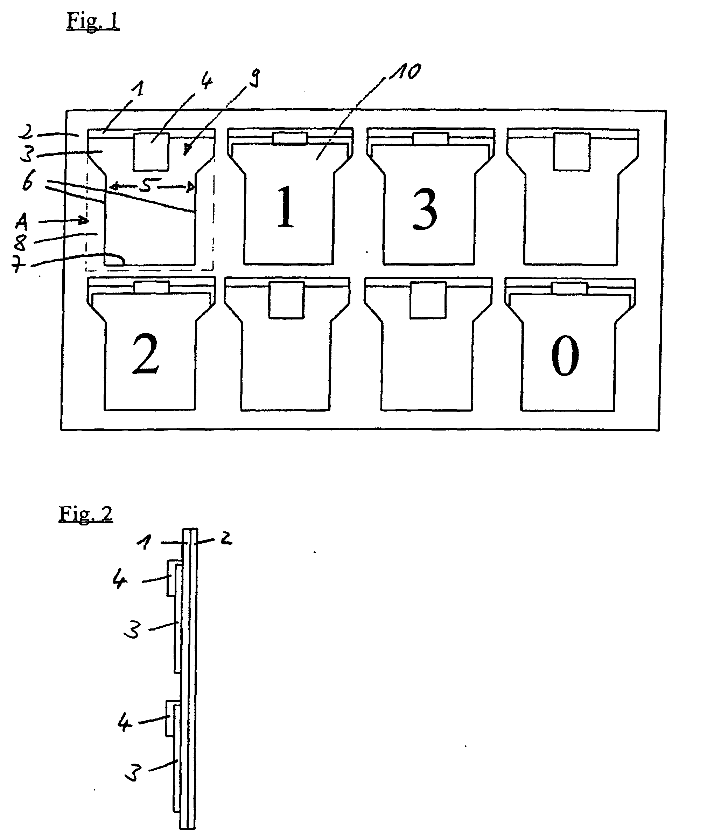

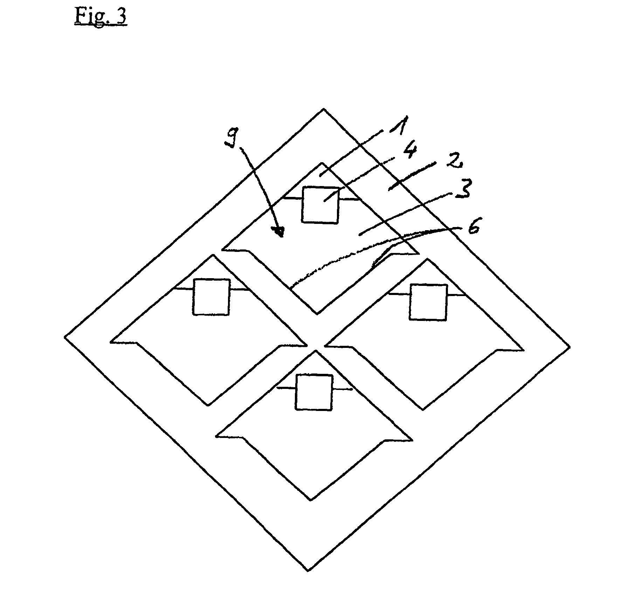

Nachfolgend wird auf die Fig. 1 und 2 Bezug genommen, in welchen eine Kennzeichnungs-Aufnahmeeinrichtung schematisch in Vorder- bzw. in Seitenansicht dargestellt ist. Die Kennzeichnungs-Aufnahmeeinrichtung enthält eine Grundplatte 1 und eine flache Halterungseinrichtung 2, die an der Grundplatte 1 mit einem Kleber flächenhaft befestigt ist. Die Grundplatte 1 und die Halterungseinrichtung 2 sind aus Kunststoff, jedoch kann für deren Herstellung auch Metall verwendet werden. Ferner können die Grundplatte 1 und die Halterungseinrichtung aneinander gelötet, geschweißt oder genietet oder auch aus einem Teil herstellt sein.

In der Grundplatte 1 sind acht rechteckige Vertiefungen 3 ausgebildet, an deren oberer Seite jeweils eine weitere, tiefere Ausnehmung 4 angeordnet ist.

In der Halterungseinrichtung 2 sind acht fensterartige Öffnungen 5 von ungefähr der gleichen Größe wie die Vertiefungen 3 herausgearbeitet, wobei die Fensteröffnungen 5 durch seitliche und untere Umrandungsabschnitte 6 bzw. 7 nach innen zurückweichend ausgebildet sind.

Nach Befestigung der Halterungseinrichtung 2 auf der Grundplatte 1 ist unter jedem Fenster 5 eine in der Grundplatte 1 ausgebildete Vertiefung 3 angeordnet und im wesentlichen sichtbar und frei zugänglich. Aufgrund des zurückweichend nach innen ausgebildeten Fensters 5 überdecken jedoch die seitlichen und unteren Umrandungsabschnitte 6, 7 einen seitlichen und unteren Bereich 8 der Vertiefung 3, wodurch insgesamt eine Tasche 9 gebildet wird. Zur Veranschaulichung eines derart überdeckten Bereichs 8 ist in Fig. 1 die eigentliche Abmessung einer Vertiefung 3 durch die Strichlinie A angedeutet.

Es sei erwähnt, daß die Ausbildung einer Tasche 9 auch durch eine entsprechende Formgebung der Fensterumrandungen 6 und 7, ohne daß eine Vertiefung 3 in der Grundplatte 1 vorgesehen ist, erfolgen kann.

In diese Taschen 9 können von oben ebene Kennzeichnungsträger 10, mit Kennziffern getrennt voneinander eingeschoben und individuell ausgetauscht werden. Die Ausnehmung 4 gewährt auch ein Fassen des Kennzeichnungsträgers 10 an dessen Rückseite und stellt somit ein gleichzeitiges, beidseitiges Greifen des Kennzeichnungsträgers 10 sicher, so daß insbesondere das Herausziehen wesentlich erleichtert wird.

Fig. 3 zeigt eine zweite Ausführungsform. Der wesentliche Unterschied zur ersten Ausführungsform besteht darin, daß die in Fig. 3 dargestellte Aufnahmeeinrichtung nicht für ebene Kennzeichnungsträger mit Kennziffern, sondern für Kennzeichnungsträger mit einer Gefahrgutbeschilderung vorgesehen ist. Für diese Art der Gefahrgutbeschilderung werden auf der Spitze stehende quadratische Kennzeichnungsträger verwendet.

Folglich weist die Aufnahmeeinrichtung der Fig. 3 auf einer Spitze stehende im wesentlichen quadratischen Taschen 9 auf. Da die Ausbildung der Taschen 9 ansonsten der Ausbildung gemäß der Fig. 1 und 2 entspricht, sind die sich entsprechenden Teile mit den gleichen Bezugszeichen belegt.

Die auf der Spitze stehende im wesentlichen quadratische Form der Grundplatte und Halterungseinrichtung ist hierbei nicht zwingend. Jedoch können die so in den Fig. 1, 2 und 3 dargestellten erfindungsgemäßen Kennzeichnungs-Aufnahmeeinrichtungen problemlos in Kennzeichnungs- oder Schilderhalter, insbesondere in Kennzeichnungs- oder Schilderhalter gemäß der Schutzschriften DE-U 93 09 672.0, DE-U 94 06 157.2 und **DE-U 94 15 445.7** eingeschoben werden. Zum sicheren Halten der Aufnahmeeinrichtung ist es dabei ausreichend, wenn der Kennzeichnungs- oder Schilderhalter einen Halterand und/oder eine Quer- und/oder Längsstrebe enthält.

Ferner können die Kennzeichnungs-Aufnahmeeinrichtungen auch eigene Befestigungseinrichtungen aufweisen, um direkt an einem Container und dgl. befestigt zu werden. So können beispielsweise an der Grundplatte 1 zusätzlich gelochte Sicken vorgesehen werden, welche Platz für einen Schraubkopf bieten, ohne die Kennzeichnungsträger 10 beim Einschieben in die oder Herausziehen aus den Taschen 9 zu behindern.

Die Erfindung umfaßt ferner die Kombination verschiedener Taschenformen und -größen in einer Aufnahmeeinrichtung infolge der flexiblen Ausgestaltungsmöglichkeiten. So können beispielsweise Gefahrgutbeschilderungen zusammen mit Kennziffern aufweisenden Trägern in einer gemeinsamen Kennzeichnungs-Aufnahmeeinrichtung untergebracht werden.

### Bezugszeichenliste

- 1: Grundplatte
- 2: Halterungseinrichtung
- 3: Vertiefung
- 4: Ausnehmung
- 5: Fensteröffnung
- 6: seitlicher Umrandungsabschnitt
- 7: unterer Umrandungsabschnitt
- 8: verdeckter Bereich
- 9: Tasche
- 10: Kennzeichnungsträger

## Patentansprüche

1. Kennzeichnungs-Aufnahmeeinrichtung zur Aufnahme von wenigstens zwei ebenen Kennzeichnungsträgern (10), umfassend eine Grundplatte (1) mit einer Halterungseinrichtung (2),wobei
für jeden Kennzeichnungsträger (10) jeweils eine Fensteröffnung (5) in der Halterungseinrichtung (2) ausgebildet ist,
wobei Fensteröffnungen durch seitliche und untere Abschnitte (6, 7) der die Fensteröffnungen (5) jeweils umgebenden Umrandungen der Halterungseinrichtung (2) innen zurückweichend ausgebildet sind und mit der Grundplatte (1) jeweils eine Tasche (9) definieren, in welcher ein von einer offenen Seite der Tasche (9) in diese einschiebbarer Kennzeichnungsträger (10) in einer vorbestimmten Anordnung haltbar ist.

2. Kennzeichnungs-Aufnahmeeinrichtung nach Anspruch 1,
**dadurch gekennzeichnet, daß**
zur Ausbildung der Tasche (9) eine Vertiefung (3) in der Grundplatte (1) eingebracht ist-, wobei zumindest ein Abschnitt (6, 7) der die Fensteröffnung (5) umgebenden Umrandungen der Halterungseinrichtung (2) partiell einen seitlichen und unteren Bereich (8) der Vertiefung (3) überdeckt.

3. Kennzeichnungs-Aufnahmeeinrichtung nach Anspruch 1 oder 2,
**dadurch gekennzeichnet, daß**
an der offenen Seite der Tasche (9) eine Einschiebe-Ausnehmung (4) in der Grundplatte (1) ausgebildet ist.

4. Kennzeichnungs-Aufnahmeeinrichtung nach einem der Ansprüche 1 bis 3, **dadurch gekennzeichnet, daß** die Kennzeichnungs-Aufnahmeeinrichung Kunststoff enthält.

5. Kennzeichnungs-Aufnahmeeinrichtung nach einem der Ansprüche 1 bis 3, **dadurch gekennzeichnet, daß** die Kennzeichnungs-Aufnahmeeinrichtung Metall enthält.

6. Kennzeichnungs-Aufnahmeeinrichtung nach einem der Ansprüche 1 bis 5, **dadurch gekennzeichnet, daß**
die Halterungseinrichtung (2) auf die Grundplatte (1) geklebt ist.

7. Kennzeichnungs-Aufnahmeeinrichtung nach einem der Ansprüche 1 bis 5, **dadurch gekennzeichnet, daß**
die Halterungseinrichtung (2) auf die Grundplatte (1) gelötet, geschweißt oder genietet ist.

8. Kennzeichnungs-Aufnahmeeinrichtung nach einem der Ansprüche 1 bis 7, **dadurch gekennzeichnet, daß** die Grundplatte (1) im wesentlichen eine quadratische oder rechtwinklige Form aufweist.

9. Kennzeichnungs-Aufnahmeeinrichtung nach einem der Ansprüche 1 bis 8, **dadurch gekennzeichnet, daß**
die Grundplatte (1) gelochte Sicken zur Aufnahme einer Befestigungsschraube umfaßt.

10. Kombination einer Kennzeichnungs-Aufnahmeeinrichtung nach einem der vorhergehenden Ansprüche mit einem Kennzeichnungshalter, der so ausgebildet ist, dass die Kennzeichnungs-Aufnahmeeinrichtung in den Kennzeichnungshalter einschiebbar ist.

11. Kombination einer Kennzeichnungs-Aufnahmeeinrichtung nach Anspruch 10 mit einem Kennzeichnungshalter mit folgenden Merkmalen, eine Grundplatte mit Halterändern an drei Seiten, eine Befestigungseinrichtung zum Befestigen der Grundplatte an einem Fahrzeugteil oder Container, wobei ein Gitter an den Halterändern der Grundplatte angebracht ist und einen schmalen Raum zwischen der Grundplatte und dem Gitter definiert, in welchem der ebene Kennzeichnungsträger von der offenen Seite eingeschoben werden kann und dass eine Hemmrichtung zur Bewegungshemmung des Kennzeichnungsträgers an dem Kennzeichnungshalter vorgesehen ist.

12. Kombination einer Kennzeichnungs-Aufnahmeeinrichtung nach Anspruch 10 mit einem Schilderhalter, der eine Grundplatte aufweist wobei eine Grundplatte mit hochgebogenen Rändern zur Aufnahme des Gefahrenschildes und ein in einem Rahmen gehaltenes Gitter zur Abdeckung und Halterung des Gefahrenschildes vorgesehen sind, dass die seitlichen Ränder der Grundplatte am oberen Ende je mit einem Langloch versehen sind, in die je seitliche, stiftartige Verlängerungen des Rahmens unter Bildung eines Scharniers eingreifen, dass die seitlichen Ränder am unteren Ende der Grundplatte ebenfalls mit Langlöchern zur Aufnahme von seitlichen, stiftartigen Verlängerungen des Rahmens versehen sind und dass die unteren Langlöcher im oberen Bereich nach außen reichende Durchbrüche aufweisen, die den Durchtritt der stiftartigen Verlängerungen nach Anhebung des Rahmens ermöglichen.

13. Kombination einer Kennzeichnungs-Aufnahmeeinrichtung nach Anspruch 10 mit einem Schilderhalter für quadratische oder rechteckige Schilder wobei eine Grundplatte des Schilderhalters mit auf drei Seiten angeordneten Halterändern zum Einschieben eines Schildes auf der offenen Seite vorgesehen ist, dass die Grundplatte auf der offenen Seite eine über das Schild hinaus weisende Verlängerung besitzt und dass die Verlängerung mit wenigstens einem Langloch zum Aufstecken des Schilderhaltes auf eine Öse des Fahrzeugs oder Containers versehen ist, die der Befestigung einer Plane mittels eines Seils dient.

14. Kombination nach Anspruch 11 oder 12, **dadurch gekennzeichnet, daß** der Kennzeichnungshalter anstelle des Gitters einen Halterand umfaßt.

15. Kombination nach Anspruch 11, 12 oder 14, **dadurch gekennzeichnet, daß** der Kennzeichnungshalter anstelle des Gitters eine Quer- und/oder Längsstrebe enthält.

## Claims

1. An identification receiving device for at least two flat identification carriers (10), comprising a base plate (1) with a mounting device (2), wherein a window opening (5) is formed in the mounting device
(2) for each of the identification carriers (10),
wherein the window openings
are designed so as to
recede inwardly via lateral and bottom portions (6, 7) of the borders of the mounting device (2) respectively surrounding the window openings (5) and
together with the base plate (1) define in each case a pocket (9) in which an identification carrier (10), which is insertable into the pocket (9) from an open side thereof, is holdable in a predetermined
arrangement.

2. An identification receiving device according to claim 1, **characterised in that** to form the pocket
(9) a recess (3) is formed in the base plate (1),
(10) while at least one portion (6, 7) of the borders of the mounting device (2) surrounding the window opening (5) partially covers a lateral and bottom zone (8) of the recess (3).

3. An identification receiving device according to claim 1 or 2, **characterised in that** an insertion recess (4) is formed in the base plate (1) at the open side of the pocket (9).

4. An identification receiving device according to any one of claims 1 to 3, **characterised in that** the identification receiving device contains plastic.

5. An identification receiving device according to any one of claims 1 to 3, **characterised in that** the identification receiving device contains metal.

6. An identification receiving device according to any one of claims 1 to 5, **characterised in that** the mounting device (2) is stuck on the base plate (1).

7. An identification receiving device according to any one of claims 1 to 5, **characterised in that** the mounting device (2) is soldered, welded or riveted on the base plate (1).

8. An identification receiving device according to any one of claims 1 to 7, **characterised in that** the base plate (1) has substantially a square or rectangular shape.

9. An identification receiving device according to any one of claims I to 8, **characterised in that** the base plate (1) contains perforated corrugations to receive a fixing screw.

10. combination of an identification receiving device according to any one of the preceding claims and an identification holder so constructed that the identification receiving device is insertable into the identification holder.

11. combination of an identification receiving device according to claim 10 with an identification holder with the following features, a base plate with holding edges at three sides, a fixing device for fixing the base plate on part of a vehicle or a container, wherein a grid is mounted at the holding edges of the base plate and defines a narrow space between the base plate and the grid, in which the flat identification carrier can be inserted from the open side and a check device is provided to check the movement of the identification carrier at the identification holder.

12. Combination of an identification receiving device according to claim 10 with a plate holder comprising a base plate, wherein a base plate with bent-up edges is provided to receive the hazard plate and a grid held in a frame is provided to cover and mount the hazard plate, the lateral edges of the base plate are each provided with a slot at the top end, in which slots there engage lateral pin-like extensions of the frame so as to form a hinge, the lateral edges at the bottom end of the base plate are also provided with slots to receive lateral pin-like extensions of the frame and the bottom slots have in the upper zone outwardly extending apertures allowing passage of the pin-like extensions after lifting of the frame.

13. combination of an identification receiving
device according to claim 10 with a plate holder for
square or rectangular plates, wherein a base plate of the plate holder is provided with holding edges on three sides for the insertion of a plate on the open side, the base plate has on the open side an extension extending beyond the plate and the extension is provided with at least one slot for pushing the plate holder on to an eye of the vehicle container serving for fixing of a tarpaulin by means of a cable.

14. Combination according to claim 11 or 12, **characterised in that** the identification holder comprises a holding edge instead of the grid.

15. Combination according to claim 11, 12 or 14, **characterised in that** the identification holder contains a transverse and/or longitudinal strut instead of the grid.

## Revendications

1. Dispositif de réception d'identification destiné à la réception d'au moins deux supports d'identification plans (10), comportant une plaque de base (1) avec un dispositif de retenue (2), dans lequel
une ouverture de fenêtre (5) est formée dans le dispositif de retenue (2) pour chaque support d'identification (10),
les ouvertures de fenêtre sont formées par des tronçons latéraux et inférieurs (6, 7) décalés vers l'intérieur des encadrements du dispositif de retenue (2) entourant les ouvertures de fenêtre (5), et définissent avec la plaque de base (1) une poche (9), dans laquelle un support d'identification (10) pouvant être inséré dans la poche (9) à partir du côté ouvert de cette dernière peut être retenu dans une position prédéterminée.

2. Dispositif de réception d'identification selon la revendication 1, **caractérisé en ce qu'**un renfoncement (3) est pratiqué dans la plaque de base (1) pour former la poche (9), au moins un tronçon (6, 7) des encadrements du dispositif de retenue (2) entourant l'ouverture de fenêtre (5) recouvrant partiellement une zone latérale et inférieure (8) du renfoncement (3).

3. Dispositif de réception d'identification selon la revendication 1 ou 2, **caractérisé en ce qu'**un évidement d'insertion (4) est pratiqué dans la plaque de base (1) du côté ouvert de la poche (9).

4. Dispositif de réception d'identification selon l'une quelconque des revendications 1 à 3, **caractérisé en ce que** le dispositif de réception d'identification contient de la matière plastique.

5. Dispositif de réception d'identification selon l'une quelconque des revendications 1 à 3, **caractérisé en ce que** le dispositif de réception d'identification contient du métal.

6. Dispositif de réception d'identification selon l'une quelconque des revendications 1 à 5, **caractérisé en ce que** le dispositif de retenue (2) est collé sur la plaque de base (1).

7. Dispositif de réception d'identification selon l'une quelconque des revendications 1 à 5, **caractérisé en ce que** le dispositif de retenue (2) est brasé, soudé ou riveté sur la plaque de base (1).

8. Dispositif de réception d'identification selon l'une quelconque des revendications 1 à 7, **caractérisé en ce que** la forme de la plaque de base (1) est sensiblement quadratique ou rectangulaire.

9. Dispositif de réception d'identification selon l'une quelconque des revendications 1 à 8, **caractérisé en ce que** la plaque de base (1) comporte des moulures perforées destinées à la réception d'une vis de fixation.

10. Combinaison d'un dispositif de réception d'identification selon l'une quelconque des revendications précédentes, comportant une retenue d'identification qui est agencée de telle sorte que le dispositif de réception d'identification puisse être inséré dans la retenue d'identification.

11. Combinaison d'un dispositif de réception d'identification selon la revendication 10, comportant une retenue d'identification présentant les particularités suivantes, à savoir une plaque de base avec des bords de retenue sur trois côtés, un dispositif de fixation destiné à la fixation de la plaque de base sur une partie d'un véhicule ou d'un conteneur, une grille étant fixée sur les bords de retenue de la plaque de base, et définissant un espace étroit entre la plaque de base et la grille, dans lequel le support d'identification plan peut être inséré à partir du côté ouvert, et un dispositif de blocage étant prévu pour bloquer le mouvement du support d'identification sur la retenue d'identification.

12. Combinaison d'un dispositif de réception d'identification selon la revendication 10, comportant un support de panneau comportant une plaque de base, une plaque de base avec des bords recourbés vers le haut étant prévue pour la réception du panneau de danger, et une grille retenue dans un cadre étant prévue pour le recouvrement et la retenue du panneau de danger, les bords latéraux de la plaque de base étant munis d'un trou oblong au niveau de leur extrémité supérieure, dans lequel s'engage des prolongements latéraux de type broche du cadre en formant une charnière, les extrémités inférieures des bords latéraux de la plaque de base étant également munies de trous oblongs destinés à la réception de prolongements latéraux de type broche du cadre, et les trous oblongs inférieurs comportant dans la zone supérieure des traversées s'étendant vers l'extérieur, qui permettent le passage des prolongements de type broche après le soulèvement du cadre.

13. Combinaison d'un dispositif de réception d'identification selon la revendication 10, comportant un support de panneau destiné à des panneaux quadratiques ou rectangulaires, une plaque de base du support de panneau comportant des bords de retenue disposés sur trois côtés étant prévue pour l'insertion d'un panneau du côté ouvert, la plaque de base comportant du côté ouvert un prolongement s'étendant au-delà du panneau, et le prolongement étant muni d'au moins un trou oblong pour la fixation du support de panneau sur un oeillet du véhicule ou du conteneur, lequel sert à la fixation d'une bâche au moyen d'un câble.

14. Combinaison selon la revendication 11 ou 12, **caractérisée en ce que**, au lieu de la grille, la retenue d'identification comporte un bord de retenue.

15. Combinaison selon la revendication 11, 12 ou 14, **caractérisée en ce que**, au lieu de la grille, la retenue d'identification comporte une entretoise transversale et/ou longitudinale.
